# EUROPÄISCHE PATENTANMELDUNG

(11) **EP 3 565 090 A1**
(43) Veröffentlichungstag der Anmeldung: **06.11.2019**
(21) Anmeldenummer: 18170759.7
(22) Anmeldetag: 04.05.2018
(51) Int. Cl.: H02K 3/30, H02K 3/34, H02K 15/12

(54) **ELEKTRISCHES ISOLATIONSSYSTEM EINES ELEKTROMOTORS UND HERSTELLUNGSVERFAHREN DAZU**

(71) Anmelder: Siemens Aktiengesellschaft, 80333 München (DE)
(72) Erfinder: Katzenberger, Tobias, 97631 Bad Königshofen STT Untereßfeld (DE); Plochmann, Bastian, 91413 Neustadt an der Aisch (DE)

(57) **Zusammenfassung**

Die Erfindung betrifft ein verbessertes elektrisches Isolationssystem eines Elektromotors, insbesondere ein hinsichtlich der Isolation der Draht-Wicklungen in den Nuten des Blechpakets gegen das Blechpaket verbessertes elektrisches Isolationssystem EIS. Außerdem betrifft die Erfindung ein kostengünstiges Herstellungsverfahren zur Herstellung eines derart verbesserten elektrischen Isolationssystems eines Elektromotors. Dies wird erreicht, in dem das Imprägnierharz zur Bildung des Vergusses des Leiters in der Nut durch ein Trägermedium, wie eine Faser, in den Leiter eingebracht wird.

## Beschreibung

Die Erfindung betrifft ein verbessertes elektrisches Isolationssystem eines Elektromotors, insbesondere ein hinsichtlich der Isolation der Draht-Wicklungen in den Nuten des Blechpakets gegen das Blechpaket verbessertes elektrisches Isolationssystem EIS. Außerdem betrifft die Erfindung ein Herstellungsverfahren zur Herstellung eines derart verbesserten elektrischen Isolationssystems eines Elektromotors.

Bekannt sind Blechpakete von Elektromotoren, die Nuten mit einer Draht-Wicklung, in der Regel einer Kupferdraht-Wicklung, wobei der Draht durch einen Drahtlack elektrisch isoliert ist, umfassen. Dabei gibt es je nach Größe und Leistungsklassen unterschiedliche Möglichkeiten, Elektromotoren zu fertigen.

In der Größenordnung von Achshöhe 63mm bis 450 mm und entsprechend den Leistungen von 150W bis 1,6 MW wird typischerweise der so genannte Stator, also das Blechpaket mit vorgewickelten Draht-Wicklungen bestückt. Diese Wicklungen werden dabei in die Statornuten mechanisch eingebracht und anschließend geschaltet. Die elektrische Isolation der Einzeldrähte untereinander sowie gegenüber dem auf Erdpotential liegenden Blechpaket ist durch Flächenisolationsmaterialien, wie Papier, und dem Drahtlack der einzelnen Wicklungsdrähte gegeben. Aufgrund der geometrischen Anforderungen der Nuten wie dem Nutzahn, der zur Ausbildung möglichst geschlossener Magnetfeldlinien dient, ist eine maximale Nutfüllung von 85 Vol% mit Kupferdraht inklusive Drahtlack möglich, da sonst beispielsweise die Einziehkräfte zu groß werden würden und damit die Flächenisolation und/oder der Drahtlack beschädigt werden könnten, beispielsweise durch Kratzer, Risse und/oder durch Dehnung. Im Ergebnis bleiben mindestens 15 Vol% freies Volumen in den Nuten des Blechpakets. Ein Teil davon liegt frei, weil die Wicklung nicht passgenau die Ecken der Nut ausfüllt, aber innerhalb der Wicklung werden bestehende Hohlräume im Imprägnierprozess möglichst vollständig mit Imprägnierharz gefüllt.

Leider hat sich gezeigt, dass hier erhebliche Lücken bestehen, weil das Imprägnierharz beim Herausholen des Stators aus dem Tauchbad oft noch so flüssig ist, dass hier keine ausreichende Füllung der Hohlräume auch innerhalb des Leiters, also der Draht-Wicklung, stattfindet.

Dazu werden in der Regel in einem Tauchverfahren ein oder mehrere Statoren langsam in ein Flüssig-Imprägnier-Harzbecken getaucht, damit das flüssige Imprägnierharz in die Hohlräume zwischen den Einzeldrähten, der Draht-Wicklung und dem Blechpaket fließen und diese Hohlräume ausfüllen kann. Im Anschluss werden die so getränkten Statoren durch Temperatureinwirkung und/oder UV-Bestrahlung über einen gewissen Zeitraum gehärtet. Dadurch wird aus dem flüssigen und/oder gelierten Imprägnierharz, das im Tauchbad die Hohlräume der Wicklung soweit wie möglich ausfüllt, der fertige Verguss, beispielsweise in Form eines vollständig ausgehärteten Duromers als Vergussmasse.

Die Qualität der Imprägnierung ist letztendlich durch einen möglichst hohen Füllgrad der Hohlräume und eine möglichst geringe Restenthalpie des Imprägnierharzes definiert. Optimal sind dabei erstens vollständig mit Imprägnierharz gefüllte Hohlräume des Stators und zweitens eine vollständige Vernetzung des Imprägnierharzes.

Nachteilig an Imprägnier-Prozessen im Allgemeinen und der Tauchbadimprägnierung im Besonderen ist, dass zur Imprägnierung verschiedener Stator-Typen die Rheologie, sowie die chemische Reaktivität des Imprägnierharzes im Bad auf den jeweiligen Stator-Typ einzustellen ist, damit auch eine vollständige Füllung der Hohlräume gewährleistet wird. Unterschiedliche Stator-Typen unterscheiden sich im Imprägnier-Verhalten - nicht nur im Tauchbad - insbesondere durch unterschiedliche Temperaturverläufe, Wärmekapazitäten und unterschiedliche Fließwege.

Je nach Stator-Typ ist eine höhere oder niedrigere Viskosität gefordert, damit durch das Imprägnierharz eine vollständige Füllung der Hohlräume und gleichzeitig eine schnelle Gelierung erfolgt. Diese erschwert jedoch im Anschluss daran das Abfließen des Imprägnierharzes bei der Herausnahme des Stators aus der Imprägnierstation, wie beispielsweise dem Tauchbad.

Damit verschiedene Stator-Typen in einer gemeinsamen Imprägnierstation wirtschaftlich imprägniert werden können, wird die Rheologie, Viskosität und/oder die chemische Zusammensetzung des Tauchbads auf einen Mittelwert eingestellt ohne eine Optimierung hinsichtlich eines Stator-Typs. Ein dafür geeignetes Imprägnierharz ist hinsichtlich der Rheologie, Thixotropierung, sowie der chemischen Reaktivität im Hinblick auf Gelierzeit und/oder Restenthalpie technisch hoch entwickelt und damit entsprechend teuer. Zwar wären aufgrund ihrer mechanischen, elektrischen und chemischen Eigenschaften auch billigere Imprägnierharze für die Anwendung im Stator ausreichend, jedoch eignen die sich nicht für ein Tauchbad in dem verschiedene Stator-Typen imprägniert werden.

Nachteilig an den üblichen Tauchbädern ist insbesondere auch, dass die thermische Vorvernetzung, auch Gelierung genannt, in der Wicklung gelingen muss, damit das flüssige Imprägnierharz in der Wicklung beim Herausnehmen des Stators aus dem Tauchbad verbleibt, wobei diese Anforderung im Gegensatz zu der Anforderung steht, dass überschüssiges Imprägnierharz an der Außenwand des Stators bei der Herausnahme aus dem Tauchbad möglichst vollständig wieder abfließen sollte. Das flüssige Imprägnierharz jedoch, das mit einem heißen Stator in Berührung war und ins Tauchbad zurücktropft, kontaminiert das Tauchbad und verschlechtert die Imprägnierharz-Qualität des Bades für nachfolgende Imprägnierungen.

Aufgabe der vorliegenden Erfindung ist es daher, eine Möglichkeit zu schaffen, die eine zielgerichtete Füllung der Draht-Wicklungen eines Leiters mit Imprägnierharz ermöglicht. Ziel ist es insbesondere auch, innerhalb der Flächenisolation, also beispielsweise der Papierwicklung, die den Leiter, also die Draht-Wicklung umschließt, die Homogenität der Imprägnierharzfüllung der Hohlräume zu erhöhen.

Diese Aufgabe wird durch den Gegenstand der vorliegenden Erfindung, wie er in der Beschreibung, den Figuren und den Ansprüchen offenbart wird, gelöst.

Gegenstand der vorliegenden Erfindung ist daher ein elektrisches Isolationssystem EIS eines Elektromotors, zumindest einen Leiter mit Draht-Wicklung in einer Nut eines Blechpakets eines Stators umfassend, dadurch gekennzeichnet, dass ein Verguss um die Drähte in dem Leiter durch Imprägnierharz auf und in zumindest einem Träger, der mit Imprägnierharz beladen und zwischen den Wickel-Drähten im Leiter angeordnet ist, erhältlich ist, derart, dass die Hohlräume des Leiters mit dem Imprägnierharz des Träger befüllt werden, wobei der Gehalt an Imprägnierharz im Träger zum Verguss der Drähte im Leiter des Blechpakets ausreicht.

Darüber hinaus ist Gegenstand der vorliegenden Erfindung ein elektrisches Isolationssystem EIS eines Elektromotors mit Draht-Wicklung als Leiter in den Nuten eines Blechpakets, bei dem die Draht-Wicklung und zumindest ein Träger im Leiter in einem Verguss eingebettet sind, wobei der Verguss im Leiter um die Drähte und den zumindest einen Träger herum gleichmäßig verteilt ist, weil das Imprägnierharz dazu nicht von außen in den Leiter geführt wird, sondern durch die Träger, die dazu mit Imprägnierharz im B-Zustand beladen sind und die mit den Wickeldrähten in der Wicklung verbleiben.

Das "gleichmäßig verteilt" steht hier im Gegensatz zur Imprägnierharz-Verteilung im Leiter, die aus beispielsweise einer Tauchbadimprägnierung resultiert, bei dem das Harz noch flüssig aus dem Leiter zumindest teilweise wieder ausgelaufen ist. Die Stellen im Leiter, die nach dem Stand der Technik das Tauchbad als erstes verlassen, haben in der Regel noch mehr ungefüllte Hohlräume als die Stellen im Leiter, die noch länger im Tauchbad bei der Herausnahme verweilen. Jedenfalls wird davon ausgegangen, dass bei der Tauchbadimprägnierung keine gleichmäßige Verteilung des Vergusses um die Drähte einer Wicklung herum bestehen.

Außerdem ist Gegenstand der vorliegenden Erfindung ein Verfahren zur Herstellung eines elektrischen Isolationssystems EIS eines Elektromotors, folgende Verfahrensschritte umfassend:
- Wicklung eines Leiters aus Wickel-Draht und Imprägnierharz-Träger
- Einziehen des so gebildeten Leiters in die Nuten eines Blechpakets eines Stators des Elektromotors und
- Aushärten der imprägnierten Wickel-Draht-Träger-Isolation.

Allgemeine Erkenntnis der Erfindung ist es, dass der aufwändige und unbefriedigende Imprägnier-Tauchprozess bei der Herstellung eines elektrischen Wickel-Draht-Isolationssystems EIS eines Elektromotors durch Einbringen einer ausreichenden Harzmenge als Prepreg an und/oder in einem Träger, wie beispielsweise einer Faser, eingespart werden kann.

Als "Träger" oder "Imprägnierharz-Träger" werden vorliegend bevorzugt Prepreg-Fasern, allein oder in Kombination mit weiteren Trägern eingesetzt. Weitere Träger in diesem Sinne können beispielsweise Schwämme und/oder Schäume sein.

Als "Leiter" wird vorliegend eine Wicklung von Drähten bezeichnet, die zusammen in Flächenisolationsmaterial, wie beispielsweise Papier, gewickelt werden und ein Bündel von Wickel-Drähten bilden, das in eine Nut eines Blechpakets eingezogen wird. Pro Leiter können beispielsweise bis zu 200 Drähte innerhalb der Draht-Wicklung, die von FlächenisolationsMaterial umwickelt ist, vorliegen.

Schneidet man einen Leiter gemäß der vorliegenden Erfindung im Querschnitt auf, so erkennt man im Kreise, die die Durchmesser der Drähte zeigen, die im besten Fall nach dem Muster einer "dichtesten" Kugel-Packung im Kristall angeordnet sind. Im Querschnittsbild sind dann zwischen den einzelnen Drähten, die die großen Kreise bilden, beispielsweise nochmal einzelne Punkte, die auf einen Träger, wie eine Faser hinweisen. Dies gilt für den Fall, dass der Querschnitt der Prepreg-Faser klein ist im Vergleich zum Querschnitt des Drahtes.

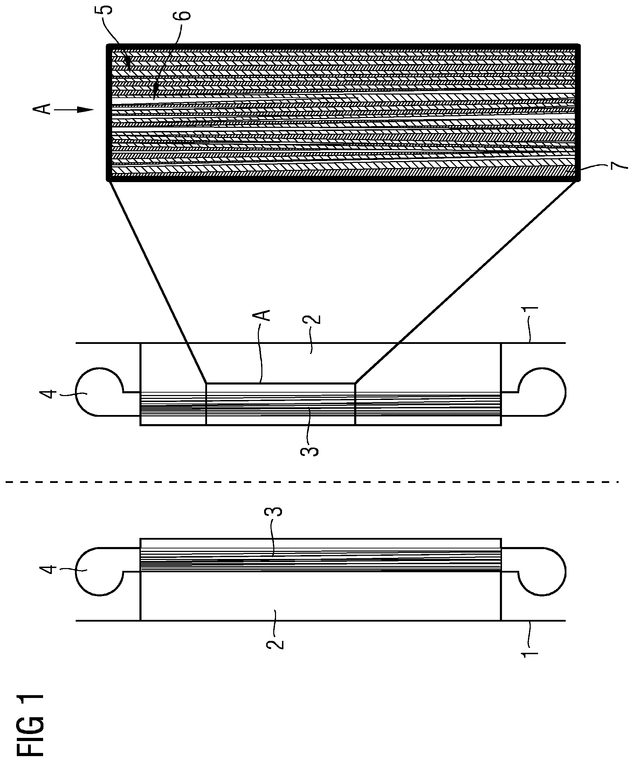

Meistens wird jedoch die Draht-Wicklung nicht mit komplett parallel angeordneten Drähten gefüllt sein, so dass in der Regel eine so genannte "wilde Wicklung", wie in Figur 1 gezeigt, vorliegen dürfte. Analog zur Raumerfüllung der dichtesten Kugelpackung, die 74% beträgt, wird deshalb davon ausgegangen, dass die restlichen zumindest 26 Vol% an Hohlraum im Leiter mit Träger, beispielsweise Fasern, Zöpfe und/oder Faserbündel befüllbar sind.

Es wird gemäß der Erfindung angestrebt, möglichst viel von diesem Hohlraum, der sowieso aus Dimensionsgründen von den Drähten nicht genutzt werden kann, mit Träger zu befüllen. Ausgehend davon, dass demnach im Leiter im Idealfall 26 Vol%, also schätzungsweise im Realfall bis zu 35Vol% oder mehr, je nach Güte der Wicklung, nicht durch Draht besetzt sind, verbleiben für die Füllung mit Imprägnierharz 35 Vol% im Leiter.

Durch den Träger wird eine dafür ausreichende Menge an Imprägnierharz in die Wicklung eingebracht, das idealerweise bis zu 100%, bevorzugt bis zu 80 % und insbesondere bevorzugt zwischen 30 und 80 % dieser oben genannten mindestens freien 35 Vol% im Leiter durch Imprägnierharz respektive Verguss und Träger ausfüllt.

Dabei ist es insbesondere auch vorteilhaft, wenn der Träger also beispielsweise die Prepreg-Fasern, gleichzeitig mit der Wicklung der Drähte, insbesondere der Kupfer-Drähte mit gewickelt werden und so zwischen den Wickel-Drähten im Leiter mit diesen in der Wicklung und im fertigen Elektromotor vorliegen.

Grundsätzlich wird die Anzahl der Prepreg-Faserwindungen, wenn ihr Durchmesser vergleichbar mit dem Durchmesser des Drahtes ist, im Verhältnis zu den Wickel-Drahtwindungen so gering wie nötig gewählt, um keinen Platz in der Nut, der mit Wickel-Draht befüllbar wäre, zu verschwenden.

Die Anzahl der Prepreg-Faserwindungen und die Größe der Prepreg-Faservolumen wird entsprechend im Spannungsfeld zwischen hoch genug, dass ein möglichst vollständiger Verguss des Leiters nach der Härtung vorliegt und so gering wie möglich, damit der Volumenfüllgrad in der Nut mit Leitungsmaterial, bevorzugt mit Kupferdraht, nicht darunter leidet, ausgewählt. Durch die Einbringung des Imprägnierharzes auf einem Träger in den Leiter kann dabei die Menge und Art des Imprägnierharzes je nach Motorentyp ganz einfach bei der Wicklung durch Zugabe /Reduktion der mit gewickelten Prepreg-Fasern in weiten Bereichen variiert werden.

Dabei zeigt sich die enorme Flexibilität der Herstellung des elektrischen Isolationssystems EIS eines Elektromotors gemäß der vorliegenden Erfindung.

Beispielsweise liegen Lang- und/oder Endlos-Fasern im Leiter mit ungefähr gleichem Durchmesser mit Wickeldraht im Verhältnis von 1 Faser zu 7 Drähten, insbesondere 1 Faser zu 5 Drähten und ganz bevorzugt 1 Faser zu 3 Drähten in der Wicklung vor.

Das Verhältnis von Prepreg-Faser zu Wickeldraht kann auch zugunsten der Faser liegen, beispielsweise im Bereich von 5 Fasern pro Draht bis einer Faser pro Draht also 1:1. Verhältnis in der Wicklung. Die jeweiligen Anteile richten sich beispielsweise nach der Saugfähigkeit der Faser, also dem Harzinhalt pro Volumenanteil Faser, dem Durchmesser der Faser etc.

Nach einer vorteilhaften Ausführungsform der Erfindung vergrößert sich das Volumen der Faser bei der Imprägnierung mit Harz durch die Harzaufnahme und verkleinert sich entsprechend bei der Bildung des Vergusses wieder.

Nach einer weiteren Ausführungsform der Erfindung sind die Fasern zusätzlich zur Bündelung oder alternativ dazu um die Wickeldrähte gelegt, gezogen und/oder gesponnen.

Als geeignete Fasern werden beispielsweise dünne Garne eingesetzt, insbesondere "verdüste" Fasern, wie beispielsweise Zahnseiden, und/oder lineare Fasern, in denen die Fibrillen unverdrillt vorliegen. Die Faser kann als keramische Faser, Kunststofffaser, Glasfaser, Filze, Corbonfaser, Polyethylenfaser, PET-Faser, Polyethylenimid-Faser, Polyamidimid-Faser und/oder Baumwollfaser, sowie als beliebiges Gemisch der oben genannten Faser in Faserbündel, Faserzöpfen oder ähnlichem vorliegen. Es können auch kurze Fasern oder Gewebe sinnvoll eingesetzt werden, dahingehend sind der Auswahl des Trägers keine Grenzen gesetzt.

Die Faser und/oder das Material des Trägers wird so gewählt, dass die Zugfestigkeit für den Wickelprozess ausreicht. Vorteilhafterweise ist die Faser vom Material, dem Aufbau und/oder der Oberflächenbeschaffenheit so gewählt, dass eine hohe Benetzbarkeit und/oder Imprägnierbarkeit mit dem jeweiligen Imprägnierharz bei ausreichender Zugfestigkeit und natürlich elektrischer Isolation beim Träger gegeben ist.

Zur Herstellung der Prepreg-vorimprägnierten Fasern werden diese mit einem Harz imprägniert, das B-Zustand-fähig ist.

Als "B-Zustand eines Harzes" wird vorliegend ein Harz, beispielsweise ein Duromer bezeichnet, das - insbesondere bei Raumtemperatur - angeliert, gegebenenfalls leicht klebrig, aber noch nicht durch gehärtet vorliegt. Dieser Zustand wird auch als Vorprodukt des Duromers als Prepolymer bezeichnet.

Dieser Zustand des Prepolymers ist gegeben, wenn das Imprägnierharz nur zu geringen Teilen vernetzt ist, dabei aber oberflächlich eine gewissen Stabilität erhält, so dass es zwar nicht fest und vernetzt aber auch nicht mehr flüssig vorliegt. Im B-Zustand kann ein Duromer nochmal aufgeschmolzen und verflüssigt werden ohne sich zu zersetzen.

Das Imprägnierharz der Prepreg-Faser liegt im B-Zustand vor, das heißt dass es unter Umständen oberflächlich leicht klebrig ist. Im Anschluss, beim Härtungsprozess, der in der Regel unter Temperaturerhöhung und/oder Bestrahlung stattfindet, schmilzt dieses Imprägnierharz im B-Zustand der Prepreg-Fasern auf, verläuft innerhalb des Leiters und innerhalb der Nut um die Wickeldrähte herum und härtet chemisch durch, bis ein Verguss gebildet ist. Ein Verguss ist aus Kunstharz und bezeichnet das fertig durch gehärtete Duromer, das nicht mehr verformbar, sondern nur noch spanabhebend bearbeitbar ist.

Im vorliegenden Fall liegt der Leiter, Wickeldraht und Fasern umfassend, im fertigen Elektromotor in einem derartigen Verguss vor.

Die gemäß der Erfindung bei der Herstellung des Leiters, also der Wicklung der leitfähigen und mit Drahtlack isolierten Wickel-Drähte, eingesetzten Träger sind Prepreg-Träger, also beispielsweise Prepreg-Fasern. Das Vorimprägnieren der Faser zur Herstellung der Prepreg-Faser kann beispielsweise durch eine Tauchimprägnierung der Fasern erfolgen. Dabei werden Fasern durch ein Tauchbad, das das Imprägnierharz, beispielsweise mit einem Lösungsmittel verdünnt, enthält. Die Faser wird in einer vorgegebenen Geschwindigkeit durch das Tauchbad durchgezogen, wobei die Faser erst mal oberflächlich und je nach Saugfähigkeit der Faser auch innerhalb der Faser, beispielsweise in offenen Poren und/oder Flecht- oder Verfilzungs-Hohlräumen, Imprägnierharz aufnimmt. Nach Beendigung des Tauchbads wird die vorimprägnierte Faser getrocknet und so von Lösungsmittel befreit. Dabei wird auch der B-Zustand des Imprägnierharzes in und an der Faser erzeugt. Es ist möglich, dass die mit Imprägnierharz im B-Zustand benetzte Faser oberflächlich leicht klebrig ist.

Die so imprägnierte und getrocknete Faser nennt man dann "Prepreg-Faser". Der mit Imprägnierharz gefüllte Träger, wie auch die Prepreg-Faser fallen auch unter den Begriff "Halbzeug". Im Gegensatz dazu wird der Träger und/oder die Faser, die keinen oder nur geringen Rest-Gehalt an Imprägnierharz ausweist, schlicht als "Faser" bezeichnet.

Es hat sich herausgestellt, dass verdüste Fasern, bei denen die Fibrillen nicht linear, sondern verwirbelt vorliegen und/oder filzähnlich verbunden sind, zum Teil auch punktuell verklebt sind, eine höhere Imprägnierharz-Aufnahme zeigen als Fasern aus linear, parallel oder quasi linear, parallel angeordneten Fasern.

Als "Fibrille" wird vorliegend eine kleine dünne Faser bezeichnet, die mit bloßem Auge unter Umständen gar nicht erkennbar ist. Mehrere Fibrillen, also beispielsweise Hunderte davon, bilden eine Faser, wie beispielsweise eine Endlosfaser oder eine lange Faser, wie sie gemäß der vorliegenden Erfindung zur Herstellung einer Prepreg-Faser eingesetzt wird.

Die Träger, beispielsweise Prepreg-Fasern zumindest teilweise umfassend, werden im Wickelprozess mit in die Wicklung eingebracht und können sich so in die geometrischen Zwischenräume der mit Drahtlack isolierten Wickel-Drähte, bevorzugt Kupfer-Drähte, legen. Das Produkt der Wicklung ist der Leiter, der in die Nut eingebracht wird und ist eine Wicklung aus leitfähigen, isolierten Wickel-Drähten mit dazwischenliegenden Prepreg-Fasern.

Da das Prepreg Imprägnierharz weich ist und sich plastisch verformen lässt, legt es sich bevorzugt in die Zwischenräume der Drähte und/oder wird von den härteren Drähten der Wicklung dahin verdrängt, so dass in der Regel keine Einbußen hinsichtlich des Volumenfüllgrads der Nut mit Wickel-Draht zu befürchten sind.

Es können im Wesentlichen "gleiche" oder verschiedene Prepreg-Fasern mit den Wickel-Drähten einen Leiter bilden. Dabei bezieht sich das "gleich" natürlich auf eine in der jeweils bezeichneten Sache realistischer weise mögliche Gleichheit. Dabei wird beispielsweise eine Baumwollfaser unabhängig von der Imprägnierharz-Füllung immer als "gleich" mit einer in Dimension vergleichbaren Baumwollfaser gelten.

Die Prepreg-Fasern können in Länge, Material, Durchmesser, Querschnittsform und/oder Anordnung der Fibrillen gleich oder verschieden sein. Die Prepreg-Fasern können in Bezug auf ihren Gehalt an Imprägnierharz pro Volumeneinheit Faser gleich oder verschieden sein.

Das Imprägnierharz der Prepreg-Fasern eines Leiters kann ebenfalls gleich, also aus einheitlichem Reaktionsharz oder verschieden, jeweils von Prepreg-Faser zu Prepreg-Faser unterschiedlichem Reaktionsharz, sein.

Insbesondere kann ein Gemisch von Fasern in Kombination mit einem Gemisch an Imprägnierharz eingesetzt werden. Es können auch Gemische verschiedener Prepreg-Fasern, geflochtene und/oder gebündelte Prepreg-Fasern, Faserverbunde je nach Bedarf und Motorentyp eingesetzt werden.

Figur 1 zeigt den Stand der Technik mit EIS, das durch Eintauchen von Leitern in Imprägnierharz-Bäder herstellbar ist.

In Figur 1, links ist zum Überblick ein Gehäuse 1 eines Stators mit einem Blechpaket 2 und Nuten 3, sowie dem jeweiligen Wickelkopf 4 gezeigt.

Der Ausschnitt A der Nutwicklung ist rechts in Figur 1 vergrößert dargestellt.

Zu erkennen sind die einzelnen Wickel-Drähte, die gleich ausgerichtete, aber nicht zwingend parallele helle Streifen 5 bilden. Diese, so genannte "Wilde Wicklung" bildet vergleichsmäßig große Hohlräume. Gemäß dem hier gezeigten Beispiel liegt keine optimale Packung der Wickel-Drähte im Leiter in der Nut 3 vor, deshalb gibt es die größeren Hohlräume, wie beispielsweise links unten der Hohlraum 7, dunkler gezeichnet. Außer den hellen Streifen, die die Wickel-Drähte 5 darstellen und den dunklen Streifen, die die Hohlräume zwischen den Drähten, die mit Imprägnierharz 7 gefüllt sind, zeigen, gibt es in dieser Detailansicht aus Figur 1 noch hellere Zwischenräume 6, die ungefüllte Hohlräume zwischen den Wickeldrähten 5 sind. Diese Hohlräume 6 zeigen, wie die Tauchimprägnierung nach dem Stand der Technik eine wilde Wicklung nur unvollständig mit Imprägnierharz füllt.

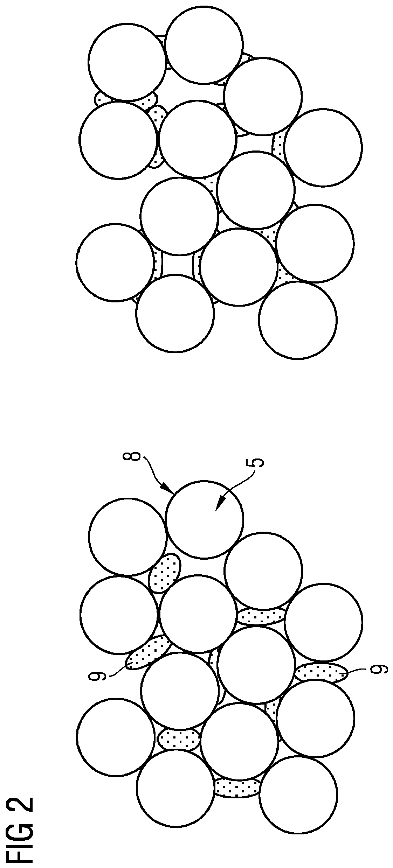

Demgegenüber zeigt Figur 2 einen Leiter nach einem Ausführungsbeispiel der vorliegenden Erfindung im Querschnitt. Die Figur 2 zeigt Figur 2a links und Figur 2b rechts, die im Herstellungsprozess zeitlich aufeinander folgen. Auch Figur 2 b zeigt dabei noch nicht das fertige Isolationssystem, sondern nur eine Zwischenstufe, in der erkennbar ist, wie sich die Prepreg-Faser 9 in der Wicklung während der Aushärtung verformt.

Geschnitten wurde durch den Leiter, in Figur 2a sind die hellen Kreise die Querschnitte der Wickel-Drähte 5, die mit Drahtlack 8 überzogen sind, wie durch den dunklen Rand 8 angedeutet. Die Prepreg-Fasern 9, die zwischen den Wickel-Drähten 5 vorgesehen sind, legen sich während der Wicklung plastisch verformbar in die Zwischenräume die von den Wickel-Drähten 5 gebildet werden.

Figur 2b zeigt den Beginn der Aushärtung des Isolationssystems gemäß eines Ausführungsbeispiels der vorliegenden Erfindung, wobei zu erkennen ist, dass die Imprägnierharz-Anteile der Prepreg-Fasern 9 bei der Aushärtung aufschmelzen und dadurch verflüssigen. Das flüssige Imprägnierharz verteilt sich und füllt insbesondere auch durch die im Leiter wirkenden Kapillarkräfte die bestehenden Hohlräume 6 aus. Bei der Aushärtung vernetzt das Imprägnierharz und wird zum festen Verguss von Draht und Träger. Im fertigen Isolationssystem kann dann im Leiter bis zu 35 Vol%, insbesondere bis zu 26 Vol%, bevorzugt bis zu 20 Vol% Imprägnierharz und Träger vorliegen.

Durch die vorliegende Erfindung kann bei der Herstellung eines elektrischen Isolationssystems EIS eines Elektromotors auf den zeit- und kostenaufwändigen Tauchimprägnierprozess verzichtet werden, ohne dabei den vorhergehenden Wickelprozessschritt maßgeblich abzuändern. Somit ist eine wesentlich größere Fertigungsvarianz gegeben, die Fertigungszeit zur Herstellung wird reduziert und dadurch ebenfalls die Fertigungskosten.

Ein besonderer Vorteil ist dass das Imprägnierharz durch ein Trägermedium, wie eine Trägerfaser bereits beim Wickelprozess in den Stator eingebracht wird. Hierdurch entfällt der Verfahrensschritt der Tauchimprägnierung. Dies ist mittels der Prepreg-Faser, die ausreichend Imprägnierharz in den Leiter einbringt, möglich.

Die Erfindung betrifft ein verbessertes elektrisches Isolationssystem eines Elektromotors, insbesondere ein hinsichtlich der Isolation der Draht-Wicklung in den Nuten des Blechpakets gegen das Blechpaket verbessertes elektrisches Isolationssystem EIS. Außerdem betrifft die Erfindung ein kostengünstiges Herstellungsverfahren zur Herstellung eines derart verbesserten elektrischen Isolationssystems eines Elektromotors. Dies wird erreicht, in dem das Imprägnierharz zur Bildung des Vergusses des Leiters in der Nut durch ein Trägermedium, wie eine Faser, in den Leiter eingebracht wird.

## Patentansprüche

1. Elektrisches Isolationssystem EIS eines Elektromotors, zumindest einen Leiter mit Draht-Wicklung in einer Nut eines Blechpakets eines Stators umfassend, **dadurch gekennzeichnet, dass** ein Verguss um die Drähte im Leiter durch Imprägnierharz auf und in zumindest einem Träger, der mit Imprägnierharz beladen und zwischen den Wickel-Drähten im Leiter angeordnet ist, erhältlich ist, derart, dass die Hohlräume des Leiters mit dem Imprägnierharz aus dem Träger befüllt werden, wobei der Gehalt an Imprägnierharz, der durch Einbringen der Träger in den Leiter kommt, zum Verguss der Hohlräume im Leiter des Blechpakets ausreicht.

2. Isolationssystem nach Anspruch 1, wobei der Träger Prepreg-Fasern umfasst.

3. Isolationssystem nach einem der Ansprüche 1 oder 2, wobei die Prepreg-Fasern verwirbelte Fibrillen umfassen.

4. Isolationssystem nach einem der vorhergehenden Ansprüche, wobei die Prepreg-Fasern Kunststofffasern umfassen.

5. Isolationssystem nach einem der vorhergehenden Ansprüche, wobei die Prepreg-Fasern Glasfasern umfassen.

6. Isolationssystem nach einem der vorhergehenden Ansprüche, wobei die Prepreg-Fasern Filze umfassen.

7. Isolationssystem nach einem der vorhergehenden Ansprüche, wobei die Prepreg-Fasern im Wesentlichen gleich sind.

8. Isolationssystem nach einem der vorhergehenden Ansprüche, wobei die Prepreg-Fasern Fasergemische aus Fasern verschiedener Längen umfassen.

9. Isolationssystem nach einem der vorhergehenden Ansprüche, wobei die Prepreg-Fasern Fasergemische aus Fasern verschiedener Materialien umfassen.

10. Isolationssystem nach einem der vorhergehenden Ansprüche, wobei im Leiter bis zu 35 Vol%, insbesondere bis zu 26 Vol% Imprägnierharz und Träger vorliegt.

11. Isolationssystem nach einem der vorhergehenden Ansprüche, wobei im Leiter in Volumenanteilen Prepreg-Träger zu Wickeldraht maximal 5 Vol% Prepreg-Faser zu 1 Vol% Wickeldraht vorliegt.

12. Elektrisches Isolationssystem EIS eines Elektromotors mit Draht-Wicklung als Leiter in den Nuten des Blechpakets, bei dem die Draht-Wicklung und zumindest ein Träger im Leiter in einem Verguss eingebettet sind, wobei der Verguss im Leiter um die Drähte und den zumindest einen Träger herum gleichmäßig verteilt ist, weil das Imprägnierharz dazu nicht von außen in den Leiter geführt wird, sondern durch die Träger, die dazu mit Imprägnierharz im B-Zustand beladen sind und die mit den Wickeldrähten in der Wicklung verbleiben.

13. Verfahren zur Herstellung eines elektrischen Isolationssystems EIS eines Elektromotors, folgende Verfahrensschritte umfassend:
- Wicklung eines Leiters aus Wickel-Draht und Imprägnierharz-Träger
- Einziehen des so gebildeten Leiters in die Nuten eines Blechpakets eines Stators des Elektromotors und
- Aushärten der imprägnierten Wickel-Draht-Träger-Isolation.

14. Verfahren nach Anspruch 13, bei dem zwischen dem Einziehen des Leiters und dem Aushärten ein Zwischenschritt zum
- Aufheizen des Stators im Heißluft-Ofen und/oder durch Strom-Heizung auf eine Temperatur, in der das Prepreg-Imprägnierharz im und an dem Imprägnierharz-Träger schmilzt und sich gleichmäßig in die angrenzenden Zwischenräume der einzelnen Wickel-Drähte in der Nut verteilt.

15. Verfahren nach einem der Ansprüche 13 oder 14, bei dem die gleichmäßige Verteilung des Imprägnierharzes zwischen den Wickeldrähten des Leiters und innerhalb der Nut zumindest teilweise über Kapillarkräfte erfolgt.
